# EUROPEAN PATENT APPLICATION

(11) **EP 4 756 220 A1**
(43) Date of publication of application: **10.06.2026**
(21) Application number: 24217904.2
(22) Date of filing: 05.12.2024
(51) Int. Cl.: F03G 7/06

(54) **A THERMODYNAMIC SYSTEM FOR CONVERTING THERMAL ENERGY INTO MECHANICAL WORK AND A METHOD FOR CONTROLLING THE THERMODYNAMIC SYSTEM**

(71) Applicant: Paramelt B.V., 1704 RJ Heerhugowaard (NL)
(72) Inventor: Fernholm, Mikael, 63535 Stora Sundby (SE); Dutton, Neill, Northwich, CW9 8XP (GB); Dahlstroem Mikael, 21407 Deutsch Evern (DE)
(74) Representative: Swea IP Law AB

(57) **Abstract**

Thermodynamic system (1) for converting thermal energy into mechanical work. The thermodynamic system comprises a thermal reactor (3) including at least one reactor cavity (5) housing a substance (6) which expands or contracts when it melts or solidifies, and at least one channel (7) for housing liquids for alternately heating and cooling the reactor cavity (5) so that the substance (6) is alternately melted and solidified. The thermodynamic system comprises a movable element (9) that is oscillating in response to the expansion and contraction of the substance (6), a control system (11) configured to control the switching between a flow of cooling liquid and a flow of heating liquid in said at least one channel (7), and one or more pressure sensors (15) for measuring the pressure in the at least one reactor cavity (5). The control system is configured to control the pressure in the reactor cavity (5) based on the measured pressure in the cavity so that the pressure in the reactor cavity approaches a limit value.

## Description

### Technical field

The present invention relates to a thermodynamic system for converting thermal energy into mechanical work using a substance which either contracts or expands when either melted or solidified. The invention also relates to a method for controlling the thermodynamic system. The invention relates to the field of energy utilization.

### Background

It is well known to utilize thermal differences to convert thermal energy into mechanical work. This is based on the principle of thermodynamic heat balance. For this purpose, thermal expansion and contraction of certain material is used. Thus, waste thermal energy from different sources can be used as heat sources and can be converted into useful energy.

WO2021116744 discloses a solar hydraulic engine utilizing a thermal element located in a heat transfer path between hot and cold surfaces, which changes its length depending on its temperature, to produce mechanical work and electrical energy. The sun is focused on a hot surface and the temperature rises. This heat is transferred to the thermal element. The thermal element is sensitive to change in temperature and increases in length with increasing temperature. The thermal element is then switched to a cold surface and decreases in length. This movement is transmitted to a hydraulic pump.

It is known in the art to use substances, which contract or expand when melted or solidified, as a thermal element for converting thermal energy into mechanical work. An example of such substance is wax, which expands when it melts and contracts when solidified. Wax is known to expand by up to 15% when it melts, and this phenomenon can be used to generate useful energy.

CN210239927U discloses a thermal reactor that converts low-grade heat into mechanical energy using wax. The thermal reactor comprises a reactor having a hollow cavity structure with an opening in one end, a cylinder barrel is inserted into the reactor shell, a piston is installed in the cylinder barrel, and the reactor shell is filled with wax. A heat exchange shell is arranged on the outer side of the reactor shell, and a heat exchange cavity is formed between the reactor shell and the heat exchange shell and used for introducing hot water and cold water in a reciprocating mode to enable the wax to be heated and melted into liquid or cooled into a solid, so that the pistons are pushed outwards and pulled back inwards in the opening direction, and a linear reciprocating type mechanical movement is formed.

A problem with the disclosed thermal reactor is that the net surplus of energy is low or even zero. This means that the electrical energy needed for powering pumps and other equipment necessary for running the thermal reactor is about the same as the mechanical energy produced by the thermal reactor. It is a desire that the net surplus of energy is as large as possible.

Another problem is that plugs of solidified substance may occur in the upper end of the cavity close to the movable element when the substance in the cavity is melted. This means that the substance in the lower part of the cavity will exert a pressure on the plug and accordingly the pressure in the cavity will increase. This will reduce the generated mechanical energy and in a worst-case scenario may cause an explosion that will cause damage to the cavity.

### Summary

The aim of the present invention is to increase the net surplus of energy when converting thermal energy into mechanical energy using the temperature difference between a heating liquid and a cooling liquid. The aim of the present invention is also to provide an improved thermodynamic system for converting thermal energy into mechanical work.

According to an aspect of the invention, this aim is achieved by a thermodynamic system for converting thermal energy into mechanical work as defined in claim 1.

The thermodynamic system comprises a thermal reactor including at least one reactor cavity housing a substance which expands or contracts when it melts or solidifies, and at least one channel for housing liquids for alternately heating and cooling the reactor cavity so that the substance is alternately melted and solidified, a movable element that is oscillating in response to the expansion and contraction of the substance, and a control system configured to control the switching between a flow of cooling liquid and a flow of heating liquid in the at least one channel. The thermodynamic system comprises one or more pressure sensors for measuring the pressure in the at least one reactor cavity, and the control system is configured to control the pressure in the reactor cavity based on the measured pressure in the cavity so that the pressure in the reactor cavity approaches a limit value.

Due to the expansion and contraction of the substance, the pressure in the reactor cavity varies a lot during the cycle of heating and cooling of the cavity. According to the invention, the pressure in the cavity is controlled so that the pressure differences are equalized between the heating and cooling phases of the cycle. Thus, the large differences in pressure in the reactor cavity during the heating and cooling of the substance is reduced or even eliminated. An even pressure in the reactor cavity leads to a higher efficiency of the energy conversion, and accordingly to a net surplus of energy.

The control system is configured to receive information on the measured pressure from the pressure sensors, and to increase the pressure in the cavity when the pressure is below the limit value, and to decrease the pressure in the cavity when the pressure is above the limit value.

According to an embodiment of the invention, the limit value is between 50 bar and 400 bar. Preferably the limit value is between 50 bar and 200 bar. Tests have shown that a pressure above 50 bar leads to a higher efficiency of the energy conversion, and accordingly gives a net surplus of energy. If the pressure in the cavity is too large, i.e. above 400 bar, there is a risk for damages to the cavity.

According to an embodiment of the invention, the control system is configured to control a load on the movable element so that the load on the movable element is increased when the measured pressure in the cavity is below the limit value, and the load on the movable element is decreased when the measured pressure in the cavity is above the limit value. The control system controls the pressure in the cavity by controlling the load on the movable element. The pressure in the cavity is controlled by varying the load on the movable element. The pressure in the cavity is increased by increasing the load on the movable element, and the pressure in the cavity is decreased by decreasing the load on the movable element. The control system is configured to increase the load of the controllable load when the measured pressure in the cavity is below the limit value and to decrease the load of the controllable load when the measured pressure in the cavity is above the limit value to ensure that the pressure in the cavity is close to the limit value.

According to an embodiment of the invention, the thermodynamic system comprises a controllable load directly or indirectly connected to the movable element, and the control system is configured to control the controllable load so that the pressure in the reactor cavity approaches the limit value. With the term "a controllable load" is meant a device with a variable load which is controllable, i.e. it is possible to increase and decrees the load in a controllable way. The pressure in the cavity is controlled by varying the load of controllable load, and accordingly varying the load on the movable element. The control system is configured to increase the load of the controllable load when the measured pressure in the cavity is below the limit value and to decrease the load of the controllable load when the measured pressure in the cavity is above the limit value. The controllable load is, for example, a generator, hydraulics, a pump, a CVT gearbox, a compressor, a cryocooler or a combination or variation thereof.

According to an embodiment of the invention, the thermodynamic system comprises resilient means disposed on the outside of the reactor cavity and arranged to apply a counter pressure on the movable element so that the pressure differences between cooling and heating of the cavity is reduced. The pressure on the movable element from the inside of the reactor cavity varies in dependence on the expansion and contraction of the substance. The resilient means applies a counter pressure on the movable element from the outside of the reactor cavity to keep an even pressure in the cavity. The counter pressure applied by resilient means on the movable element varies and depends on the pressure in the cavity to counteract the variations in pressure in the cavity. The counter pressure on the movable element increases when the resilient means is compressed, and the counter pressure on the movable element decreases when the resilient means expands. Thus, the counter pressure on the movable element increases when the pressure in the cavity increases, and the counter pressure on the movable element decreases when the pressure in the cavity decreases. The resilient means helps to keep the pressure in the reactor cavity essentially constant.

According to an embodiment of the invention, the thermodynamic system comprises a spring arranged to act on the movable element so that the spring applies a counter pressure on the movable element from the outside of the reactor cavity. The spring is compressed when the pressure in the reactor cavity increases due to fact that the movable element applies an increasing pressure on the spring. The spring expands when the pressure in the reactor cavity decreases due to fact that the movable element applies a decreasing pressure on the spring. Thus, the counter pressure on the movable element increases when the spring is compressed, and the counter pressure on the movable element decreases when the spring expands.

According to an embodiment of the invention, the thermodynamic system comprises a pressure chamber filled with gas arranged to apply pressure on the movable element from the outside of the reactor cavity. The pressure chamber works in the same way as described above for the spring. The counter pressure on the movable element increases when the gas in the pressure chamber is compressed, and the counter pressure on the movable element decreases when the gas in the pressure chamber expands.

According to an embodiment of the invention, the thermal reactor has a first end and a second end opposite the first end, the movable element is disposed at the first end of the thermal reactor, and the thermal reactor comprises an inlet for the heating liquid arranged at the first end of the thermal reactor and an inlet for the cooling liquid arranged at the second end of the thermal reactor. The control system is configured to control the flow of cooling and heating liquids so that the direction of the flow of heating liquid is from the first end towards the second end of the thermal reactor, and the direction of the flow of cooling liquid is from the second end towards the first end of the thermal reactor. The direction of the flow of cooling liquid is opposite the direction of the flow heating liquid. By heating the reactor cavity from the first end towards the second end it is ensured that the substance in the cavity starts to melt in the part closest to the movable element, and then the melting progresses towards the second end. By cooling the reactor cavity from the second end towards the first end it is ensured that the solidification of the substance in the cavity starts in the part furthest away form to the movable element, and then progresses towards the first end of the cavity. Thus, the plugs of solid substance in the first end of the cavity, as previously mentioned, are avoided. This embodiment will increase the generated mechanical energy and prevents damage to the cavity due to plugs in the part of the cavity closest to the movable element.

According to an embodiment of the invention, the thermodynamic system comprises at least one pump for providing heating and cooling liquid to the at least one channel, and the control system is configured to control the at least one pump so that the direction of the flow of cooling liquid is opposite the direction of the flow heating liquid.

According to an embodiment of the invention, the control system comprises a plurality of temperature sensors for measuring the temperature in different parts of the reactor cavity, the control system is configured to determine the fraction of melted substance or the fraction of solidified substance in the reactor cavity based on the measured temperatures, and to control the flow of cooling or heating liquid in the at least one channel so that the fraction of melted substance in the reactor cavity is between 20% and 80% of the total amount of substance in the reactor cavity. Preferably, the fraction of melted substance in the reactor cavity is between 25% and 75% of the total amount of substance in the reactor cavity, and most preferably the fraction of melted substance in the reactor cavity is between 30% and 70% of the total amount of substance in the reactor cavity. This embodiment makes it possible to increase the generation of net surplus energy. When heating the substance, the melted fraction of substance is not allowed to go up to 100%, since the return of energy is reduced when the melted fraction of substance approaches 100%. When cooling the substance, the melted fraction of substance is not allowed to reach close to 0%, since the return of energy is reduced when the melted fraction of substance approaches 0%. For example, initial tests have shown that between 30% and 70% degree of melting of the substance is optimal for generating net surplus energy.

According to an embodiment of the invention, the thermodynamic system comprises at least one pump for providing heating and cooling liquid to the at least one channel, one or more valves for switching between feeding heating or cooling liquid to the at least one channel, and the control system is adapted to control the at least one pump and the one or more valves.

According to an embodiment of the invention, the control unit is configured to control the one or more valves and the pump so that the cycle time for switching between feeding cooling liquid and heating liquid is between 1s and 30s. Such short cycle time for melting and cooling the substance contribute to a net surplus of the energy production.

According to an embodiment of the invention, a part of the reactor cavity is filled with a fluid having a density which differs from the density of the substance. This part of the reactor cavity is disposed between the substance and the movable element such that the fluid exerts a pressure on the movable element when the volume of the substance is expanding in the reactor cavity. A first part of the reactor cavity is filled with the substance and a second part of the reactor cavity is filled with the fluid. The fluid is used to transfer mechanical energy from the substances in the reactor cavity to the movable element with small losses. Thus, the transfer of mechanical energy from the substances in the reactor cavity to the movable element is improved. The fluid must have a density that differs from the density of the substance to avoid that the liquid is mixed with the substance. If the movable element is arranged in an upper end of the thermal reactor, the density of the fluid should be lower than the density of the substance to ensure that the fluid is kept on top of the substance and accordingly in contact with the movable element. On the contrary, if the movable element is arranged in a lower end of the thermal reactor, the density of the fluid should be higher than the density of the substance to ensure that the fluid is kept below the substance and accordingly in contact with the movable element by means of gravity.

According to an embodiment of the invention, the fluid is hydraulic oil or hydraulic fluid. Hydraulic oil is a non-compressible fluid that is used to transfer power within hydraulic machinery and equipment.

According to an embodiment of the invention, the reactor cavity is an elongated cylinder defining a cylindrical space for housing the substance.

The thermal reactor comprises one or more reactor cavities.

According to an embodiment of the invention, the thermodynamic system comprises a plurality of reactor cavities, and each reactor cavity defines a space for housing the substance. The reactor cavities are elongated and arranged in parallel and at a distance from each other so that one or more channels for housing the liquids is formed between the reactor cavities. By providing many reactor cavities arranged in parallel, instead of a large reactor cavity, the cross-sectional area of each of the reactor cavities can be small. A smaller cross-sectional area of the reactor cavity reduces the time it takes to heat and cool the substance in the reactor cavity and accordingly reduces the cycle time, and by that increases the surplus energy achieved.

According to an embodiment of the invention, the reactor cavities are enclosed by an envelope, and the one or more channels for housing the liquids is formed inside the envelope and between the reactor cavities. Thus, the flow of liquid inside the envelope and between the cavities will be laminar. A laminar flow inside the envelop is advantages since it has a reduced turbulence which reduces the energy needed for pumping the flow.

According to an embodiment of the invention, each of the reactor cavities is an elongated cylinder defining a cylindrical space for housing the substance, the elongated cylinders are arranged in parallel and at a distance from each other.

According to an embodiment of the invention, a first part of each of the reactor cavities is filled with the substance, and a second part of each of the reactor cavities is filled with a fluid having a density which differs from the density of the substance. The second parts of the reactor cavities are connected to each other so that the fluids in each of the cavities are in physical contact with each other. The second parts of the reactor cavities are disposed between first parts the reactor cavities including the substance, and the movable element such that the fluids exert a pressure on the movable element when the volume of the substance is expanding in the reactor cavities. The purpose of the fluid is to bring together the mechanical energy from the individual reactor cavities to one point so that the increase in volume in the cavities can be extracted into mechanical energy.

According to an embodiment of the invention, the control system is configured to control the flow rate of the liquid in the at least one channel so that the flow rate does not exceed 20 l/s. Preferably, the flow rate of the liquid in the at least one channel is between 1 l/s and 10 l/s. For example, the flow rate of the liquid in the at least one channel is between 4 l/s and 10 l/s. If the flow of the liquid becomes too high, the pumps will consume all the excess energy. If the flow of the liquid becomes too low, the liquid will not be able to cool or heat fast enough. Tests have shown that the flow rate affects the net surplus energy, but that a flow of up to 20 l/s contribute to a net surplus in the energy production depending on the scale of the system and the availability of heat energy. However, the flow must be adapted to the temperature of the liquid. If the temperature is high the flow rate can be reduced. The flow rate can be increased when the temperature is low.

According to an embodiment of the invention, the thermodynamic system comprises a hydraulic motor connected to the movable element, and an electric generator connected to the hydraulic motor so that the electric generator produces electricity in response to the reciprocal movement of the movable element. The pressure generated in the reactor cavity can be used to drive the hydraulic motor. By connecting the hydraulic motor to the electric generator, the mechanical energy can be converted into electrical energy. The movable element may comprise a hydraulic piston connected to the hydraulic motor.

According to an embodiment of the invention, the substance is wax.

According to an embodiment of the invention, the melting point of the substance is in the interval 0°C - 80°C, and preferably the interval 5°C - 70°C. This makes it possible to use water as heating and cooling liquids in the thermodynamic system.

According to another aspect of the invention, the above aim is achieved by a method for controlling the thermodynamic system.

The method comprises:
- alternately supplying heating or cooling liquid to the at least one channel so that the substance is alternately melted and solidified, and
- monitoring the pressure in the reactor cavity, and
- increasing the pressure in the reactor cavity when the pressure the reactor cavity is below the limit value and decreasing the pressure in the reactor cavity when the pressure the reactor cavity is above the limit value.

According to an embodiment of the invention, the method comprises controlling the supply of heating and cooling liquid so that the fraction of melted substance in the reactor cavity is between 20% and 80 % of the total amount of substance in the reactor cavity.

According to an embodiment of the invention, the method comprises determining the fraction of melted substance in the cavity, and controlling the supply of heating and cooling liquid so that the fraction of melted substance in the reactor cavity is between 20% and 80 % of the total amount of substance in the reactor cavity. Alternatively, the method comprises determining the fraction of solidified substance in the cavity and controlling the supply of heating and cooling liquid so that the fraction of solidified substance in the reactor cavity is between 20% and 80 % of the total amount of substance in the reactor cavity, and accordingly the fraction of melted substance in the reactor cavity is between 20% and 80 % of the total amount of substance in the reactor cavity. The return of the energy in the system becomes high since the melted fraction of substance is kept between 20% and 80 % of the total amount of substance in the reactor cavity.

According to an embodiment of the invention, the temperature difference between the heating liquid and the cooling liquid is between 20 and 25°C. Thus, it is possible to use heating liquid and the cooling liquid at rather low temperatures and still achieve a high efficiency of the energy conversion. For example, it is possible to use water at 5°C as cooling liquid and water at 30°C as heating liquid.

According to an embodiment of the invention, the method comprises controlling the flow rate in the at least one channel so that the flow rate does not exceed 20 l/s. Preferably, the flow rate of the liquid in the at least one channel is controlled so that it is between 1 l/s and 20 l/s, and more preferably between 1 l/s and 10 l/s. Thus, the flow rate is adjusted to maximize the net energy gain.

### Brief description of the drawings

The invention will now be explained more closely by the description of different embodiments of the invention and with reference to the appended figures.
Fig. 1 shows schematically an example of a thermodynamic system including a reactor cavity.
Fig. 2 shows schematically a part of another example of a thermodynamic system.
Figs. 3a-b disclose an example of a thermodynamic system including a plurality of reactor cavities. Fig. 3a shows the thermodynamic system when the substance in the reactor cavity is contracted, and fig. 3b shows the thermodynamic system when the substance in the reactor cavity is expanded.
Fig. 4 shows a cross section through an upper part of the thermal reactor shown in figures 3a-b.
Fig. 5 shows a flow diagram of an example of a method for controlling the thermal reactor.

### Detailed description

Aspects of the present disclosure will be described more fully hereinafter with reference to the accompanying drawings. The thermodynamic system can, however, be realized in many different forms and should not be construed as being limited to the aspects set forth herein. Like numbers in the drawings refer to like elements throughout.

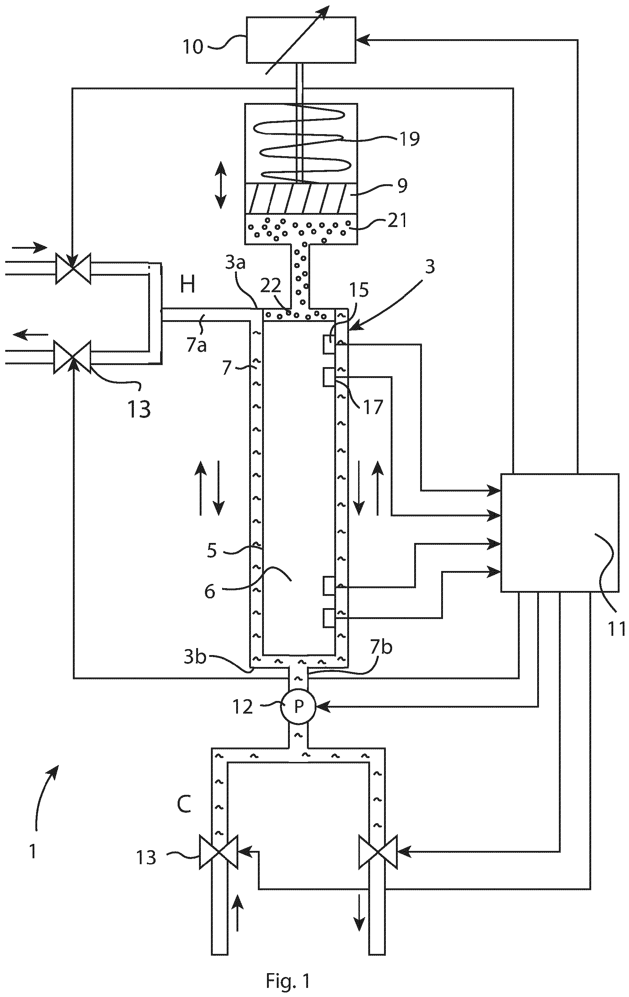

Figure 1 shows schematically an example of a thermodynamic system 1 for converting thermal energy into mechanical work according to the invention. The thermodynamic system 1 comprises a thermal reactor 3 including at least one reactor cavity 5 housing a substance 6 which expands or contracts when it melts or solidifies, and at least one channel 7 for housing a liquid for alternately heating and cooling the reactor cavity 5 so that the substance is at least partly melted and solidified. The reactor cavity 5 can have different shapes. For example, the reactor cavity 5 can be cylindrical or has a rectangular shape. Preferably, the channel 7 surrounds the reactor cavity 5. For example, the channel 7 and the reactor cavity can be concentrical. The walls of the reactor cavity 5 is, for example, made of aluminium, steel, brass or carbon fibres.

In this example, the substance 6 is wax which expands when it melts and contracts when it is solidified. However, the substance can be other types of substances that changed its volume (expands or contracts) when it melts or solidifies, such as water, paraffin, cellulose acetate butyrate, ethylene ethyl acrylate, gutta percha, phenolic resin, lead, tin, or alkali metals. Preferably the melting point of the substance is in the interval 0°C-80°C, and most preferably the melting point of the substance is in the interval 5°C - 70°C. The type of substance will need to be adjusted to fit the specific user case. The heating and cooling liquids used depend on the user case. Suitably, the liquid used for heating and cooling is water. However, the liquid can also be liquid with added salt, water with anti-freeze, water with other additives, an alcohol, or an oil.

The thermodynamic system 1 comprises a movable element 9 that is oscillating in response to the expansion and contraction of the substance 6. In the illustrated example, the movable element 9 is a piston, for example, a hydraulic piston. However, the movable element can be other types of mechanical elements such as a hydraulic motor, a turbine, or a pump.

The thermodynamic system 1 comprises a control system 11 for controlling the flow of heating and cooling liquid in the channel 7. The control system 11 can be electrical and/or mechanical. For example, the control system comprises a programmable logical unit, such as a PLC, a CPU, or a Field Programmable Gare Array (FPGA). For example, the control system 11 comprises a microcomputer comprising a single-chip microprocessor such as a CPU, memory in the form of read-only memory (ROM) and random-access memory (RAM), input/output (I/O) ports, and a bus or system of interconnecting wires.

The thermodynamic system 1 comprises one or more pipes for feeding heating liquid to the channel 7 and one or more pipes for feeding cooling liquid to the channel 7. The thermodynamic system comprises at least one pump 12 for pumping the heating and cooling liquid through the channel 7, and one or more valves 13 for switching between feeding heating or cooling liquid to the channel 7. The pump 12 is, for example, a pump that can change the direction of the flow between two opposite directions. The control system 11 is configured to control the pump 12 and the one and more valves 13. For example, the control system 11 comprises four one-way valves 13, as illustrated in the figure 1. Alternatively, the control system 11 comprises two three-way valves. If the thermodynamic system 1 comprises a closed loop for the cooling liquid and a closed loop for the heating liquid two check valves can be used, one check valve for the cooling loop and one check valve for the heating loop. Suitably, the control system 11 is configured to control the valves 13 so that the cycle time for switching between feeding cooling and heating liquid is between 1s and 30s.

The control system 11 is configured to control the switching between a flow of cooling liquid and a flow of heating liquid in the channel 7. The control system 11 is adapted to control the pump 12 and the one and more valves 13 and by that control the switching between supplying heating liquid and cooling liquid to the channel 7 and accordingly to control the duration of the supplying of heating liquid and cooling liquid to the channel.

The thermodynamic system 1 comprises one or more pressure sensors 15 for measuring the pressure in the reactor cavity 5. Preferably, a plurality of pressure sensors 15 are disposed at different positions in the reactor cavity for measuring the pressure at different locations in the reactor cavity 5. The locations of the pressure sensors are of minor importance. Suitably, there is one sensor in each respective area. For example, one pressure sensor on top of the substance 6, one pressure sensor on the bottom of the substance 6, and one pressure sensor in the liquid flow in the channel 7. The pressure sensors can be of different types, for example Barometer, Manometer, Bourdon Tube, Sealed Pressure Sensors, Piezoelectric Pressure Sensors, or Strain Gauge Pressure Sensors.

Due to the expansion and contraction of the substance, the pressure in the reactor cavity varies a lot during the cycle of heating and cooling of the cavity. The control system 11 is configured to receive information on the measured pressure from the one or more pressure sensors 15 and to control the pressure in the reactor cavity based on the measured pressure in the cavity so that the pressure in the reactor cavity approaches a limit value. The control system 11 is configured to increase the pressure in the cavity when the pressure is below the limit value, and to decrease the pressure in the cavity when the pressure is above the limit value. The pressure in the cavity is controlled so that the pressure differences are equalized between the heating and cooling phases of the cycle. An even pressure in the reactor cavity leads to a higher efficiency of the energy conversion, and accordingly to a net surplus of energy.

If there are more than one pressure sensor in the reactor cavity, for example, the mean value of the pressure values can be compared with the limit value. The mean value of the pressure values from the pressure sensors 15 is monitored to increase the efficiency of the energy conversion.

For safety reasons, it is also possible to monitor the peak value from the sensors. For example, a certain deviation from the limit value within a predetermined range can be allowed for each sensor. If any sensor deviates outside this range of permitted variation, the entire system can be shut down to prevent damage.

Preferably, the limit value is between 50 bar and 400 bar, and most preferably the limit value is between 50 bar and 200 bar. Tests have shown that a pressure above 50 bar leads to a higher efficiency of the energy conversion, and accordingly gives a net surplus of energy. If the pressure in the cavity is too large, i.e. above 400 bar, there is a risk for damages to the cavity. A suitable limit value is selected in dependence on user preferences. A higher limit value for the pressure leads to higher efficiency of the energy conversion, but also to a more expensive system to manufacture. A lower limit value for the pressure leads to a system that is cheaper to manufacture but with lower efficiency of the energy conversion.

The amount of power the thermodynamic system generates is not constant during a cycle of heating and cooling of the reactor cavity. If there is a constant load on the movable element when the pressure in the reactor cavity varies, this will create mechanical wear and tear that shortens the life of the thermodynamic system at best, and at worst causes the thermodynamic system to stop working catastrophically.

In the illustrated example, the thermodynamic system 1 comprises a controllable load 10 directly or indirectly connected to the movable element 9. The controllable load determines the load on the movable element 9. Thus, the load on the movable element 9 is increased when the load of the controllable load 10 is increased and the load on the movable element 9 is decreased when the load of the controllable load 10 is decreased. The controllable load is, for example, a generator with a controllable load, a motor with a controllable load, or a pump with a controllable load. If the controllable load 10 is an electrically controlled load, the control system may control how much current is demanded to control the load on the movable element. The control system 11 is configured to control the controllable load 10 so that the pressure in the reactor cavity 5 approaches the limit value. The control system 11 is configured to increase the load of the controllable load 10 when the measured pressure in the reactor cavity 5 is below the limit value and to decrease the load of the controllable load 10 when the measured pressure in the reactor cavity 5 is above the limit value. The increase and decrease of the load are proportional to the increase and decrease of the pressure in the reactor cavity.

The pressure on the movable element 9 from the inside of the reactor cavity 5 varies in dependence on the expansion and contraction of the substance 6. Preferably, the thermodynamic system comprises resilient means arranged to apply a counter pressure on the movable element 9 from the opposite side of the movable element 9 so that the pressure differences during cooling and heating of the reactor cavity 5 is reduced. In the illustrated example, the resilient means is a spring 19 arranged to act on the movable element 9 so that the spring 19 applies a counter pressure on the movable element 9 from the outside of the reactor cavity 5. In the illustrated example, the spring 19 is a coil spring. The spring 19 is compressed when the pressure in the reactor cavity 5 increases due to fact that the movable element 9 applies an increasing pressure on the spring 19. The spring 19 expands when the pressure in the reactor cavity 9 decreases due to fact that the movable element 9 applies a decreasing pressure on the spring. Thus, the counter pressure on the movable element 9 increases when the spring is compressed, and the counter pressure on the movable element decreases when the spring expands. The spring 19 helps to keep the pressure in the reactor cavity 5 essentially constant.

In the illustrated example, the thermodynamic system 1 comprises an expansion chamber 21 and the movable element 9 is arranged inside the expansion chamber 21. The spring 19 is disposed in an upper part of the expansion chamber 21 and above the movable element 9. The spring 19 is optional. The thermodynamic system may comprise other means arranged to apply a counter pressure on the movable element so that the pressure differences between cooling and heating of the cavity is reduced.

In the illustrated example, the expansion chamber 21 and an upper part of the reactor cavity 5 is filled with a fluid 22 having a density which differs from the density of the substance 6. The lower part of the reactor cavity 5 is filled with the substance 6. The fluid 22 is arranged between the substance 6 and the movable element 9, and in physical contact with the movable element 9 so that the fluid 22 exerts a pressure on the movable element 9 when the volume of the substance 6 is expanding in the reactor cavity 5. The fluid 22 is used to transfer mechanical energy from the substances 6 to the movable element 9. The fluid must have a density that differs from the density of the substance to avoid that the liquid is mixed with the substance. If the movable element is arranged in an upper end of the thermal reactor, as in the illustrated example, the density of the fluid 22 should be lower than the density of the substance 6 to ensure that the fluid 22 is kept on top of the substance 6 and accordingly in contact with the movable element 9.

Preferably, the fluid 22 has a low thermal conductivity. For example, the fluid has a thermal conductivity less than 0.3W/mK. Thus, transfer of heat or cold from the substance 6 to the movable element 9 via the fluid 22 is at least partly prevented. Examples of fluids with low thermal conductivity are oils with 14 to 20 carbon atoms. However, alcohols, or mineral oils can also be used. For example, the fluid 22 is a hydraulic oil or a hydraulic fluid. Hydraulic oil is a non-compressible fluid that is used to transfer power within hydraulic machinery and equipment.

The fluid 22 is optional. In another example, the whole reactor cavity 5 can be filled with the substances 6, and the substance 6 is in physical contact with the movable element 9 so that the substance 6 exerts a pressure on the movable element 9 when the volume of the substance 6 is expanding.

The thermodynamic system utilizes the fact that certain substances change their volume when they melt and solidify to convert heat energy into mechanical work. For example, wax is known to expand by up to 15% when it melts, and this phenomenon can be used in combination with temperature differences to generate useful energy. The thermodynamic system works by using liquids with different temperatures, for example, cold water at 5°C and heating water at 30°C, to alternately melt and solidify the substance. However, other temperatures of the liquids can be used, such as -10°C and 15°C. This temperature difference, which is 25°C, drives the process. Suitably, the difference between the heating and cooling liquid is between 20 and 25° C to achieve high efficiency of the energy conversion. When, for example wax, is exposed to the higher temperature, it melts and expands. The pressure generated in the reactor cavity can be used to drive a mechanical device, such as a hydraulic motor or a hydraulic piston. The expansion and contraction of the substance in the reactor cavity 5 can be used to drive the mechanical device. By connecting the mechanical device to a generator, the mechanical energy can be converted into electrical energy.

The thermodynamic system 1 may comprises a hydraulic motor, and an electric generator connected to the hydraulic motor so that the electric generator produces electricity in response to the reciprocal movement of the movable element. The movable element may comprise a hydraulic piston connected to the hydraulic motor. By connecting the hydraulic motor to an electric generator, the mechanical energy can be converted into electrical energy.

The thermodynamic system 1 can use temperature differences within a low range as an energy source. Cooling liquid is taken from a source at, for example, 5°C, while heating liquid can be obtained from various heat waste sources, such as nuclear power plants or exhaust pipes from industries. This use of natural or existing heating and cooling sources makes the system environmentally friendly and cost-effective.

The thermal reactor 3 has a first end 3a and a second end 3b opposite the first end. In the illustrated example, the movable element 9 is disposed at the first end 3a of the thermal reactor. In the illustrated example, the thermal reactor 3 comprises an inlet 7a to the channel 7 arranged at the first end 3a of the thermal reactor for supplying the heating liquid to the channel 7, and an inlet 7b arranged at the second end 3b of the thermal reactor for supplying the cooling liquid to the channel 7. The inlet 7a will also serve as an outlet for used liquid when the cooling liquid is supplied to the channel 7 via the inlet 7b. In the same way, the inlet 7b will serve as an outlet for used liquid when the heating liquid is supplied to the channel 7 via the inlet 7a. In this case, the reactor cavity is heated from the top of the thermal reactor 3 and the reactor cavity is cooled down from the bottom of the thermal reactor 3.

In this example, the control system 11 is configured to control the flow of cooling and heating liquids so that the direction of the flow of heating liquid is from the first end 3a towards the second end 3b of the thermal reactor, and the direction of the flow of cooling liquid is from the second end 3b towards the first end 3a of the thermal reactor. Thus, the direction of the flow of cooling liquid is opposite the direction of the flow of heating liquid. The control system 11 controls the flow of cooling and heating liquids to cool the reactor cavity from the bottom and heat the reactor cavity from the top by controlling the pumping direction of the pump 12 and the opening and closing of the valves 13. By heating the reactor cavity from the first end 3a towards the second end 3b it is ensured that the substance in the cavity starts to melt in the upper part of the cavity that is closest to the movable element 9, and then the melting of the substance progresses towards the second end 3b. By cooling the reactor cavity from the second end 3b towards the first end 3a it is ensured that the solidification of the substance in the cavity starts in the bottom part, i.e. the part furthest away form to the movable element, and then the solidification progresses towards the upper part of the cavity. Thus, the plugs of solid substance in the first end of the cavity, as previously mentioned, are avoided. This will increase the generated mechanical energy and prevents damage to the cavity due to plugs in the part of the cavity closest to the movable element.

In one aspect of the invention, the control system 11 comprises a plurality of temperature sensors 17 for measuring the temperature in different parts of the reactor cavity 5. The temperature sensors can, for example, be NTC, RTD, Thermocouple or Semiconductor-based.

The control system 11 is configured to receive information on the measured temperatures from the temperature sensors 17, and to determine the fraction of melted substance 6 or alternatively the fraction of solidified substance in the reactor cavity 5 based on the measured temperatures, and to control the flow of cooling and heating liquid in the channel 7 so that the fraction of melted substance in the reactor cavity 5 is between 20% and 80 % of the total amount of substance in the reactor cavity. The control system 11 is configured to control the supply of heating liquid to the channel 7 so that the fraction of melted substance in the reactor cavity 5 do not exceed 80 % of the total amount of substance in the reactor cavity, and to control the supply of cooling liquid to the channel 7 so that the fraction of melted substance in the reactor cavity 5 is never below 20% of the total amount of substance in the reactor cavity. This aspect makes it possible to increase the generation of net surplus energy. When heating the substance, the melted fraction of substance is not allowed to go above 80%, since the return of energy is reduced when the melted fraction of substance approaches 100%. When cooling the substance, the melted fraction of substance is not allowed to reach below 20%, since the return of energy is reduced when the melted fraction of the substance 6 approaches 0%.

Preferably, the fraction of melted substance in the reactor cavity is between 25% and 75% of the total amount of substance in the reactor cavity, and most preferably the fraction of melted substance in the reactor cavity is between 30% and 70% of the total amount of substance in the reactor cavity. Initial tests have shown that between 30% and 70% degree of melting of the substance is optimal for generating net surplus energy.

In one aspect, the control unit 12 is configured to control the one or more pumps 12 so that the flow rate of the liquid in the channel 7 does not exceed 10 l/s. The flow should not exceed a proportional net gain of energy. For example, the control unit 12 is configured to control the one or more pumps 12 so that the flow rate of the liquid in the channel 7 is between 4 l/s and 10 l/s. If the flow of the liquid becomes too high, the pumps will consume to much energy. However, if the flow of the liquid becomes too low, the liquid will not be able to cool or heat the substance fast enough. Tests have shown that a flow of up to 10 l/s leads to a net surplus in energy production.

In one aspect, the control unit 12 is configured to control the one or more valves 13 so that the cycle time for switching between feeding cooling and heating liquids is between 1s and 30s. Preferably, the cycle time for switching between feeding cooling and heating liquids is between 1s and 10s. Thus, the cycle time for melting and cooling the substance is short and accordingly a net surplus can be achieved. The shorter cycle time, the higher efficiency of the heat conversion.

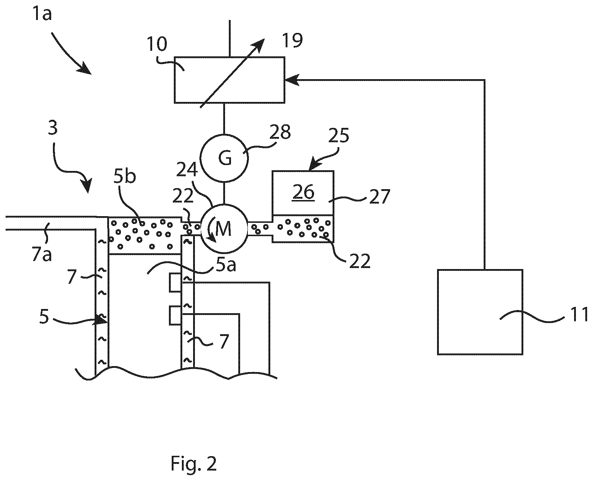

Figure 2 shows schematically a part of another example of a thermodynamic system 1b. This thermodynamic system 1b differs from the thermodynamic system disclosed in figure 1 in that the movable element 9 is a hydraulic motor 24. A hydraulic motor is a mechanical actuator that converts hydraulic pressure and flow into torque and rotational motion. In this example, the fluid 22 is a hydraulic fluid/oil which drives the hydraulic motor 24. In this example, the hydraulic motor 24 is connected to an electric generator 28 including a controllable load 10. The electric generator 28 converts the rotational motion from the hydraulic motor into electrical energy. Thus, the electric generator 28 produces electricity in response to the expansion and contraction of the substance 6.

The thermodynamic system 1b further differs from the thermodynamic system disclosed in figure 1 in that the resilient means comprises a pressure chamber 26 filled with gas 27. The thermodynamic system 1b comprises an expansion chamber 25 partly filled with the fluid 22. The expansion chamber 25 further comprises a pressure chamber 26 arranged above the fluid and filled with the gas 27. The expansion chamber 25 is arranged after the hydraulic motor 24. A lower part of the expansion chamber 25 is filled with the fluid 22 and an upper part of the expansion chamber 25 is filled with the gas 27. The fluid 22 is in physical contact with the movable element of the hydraulic motor 24 on the outside of the reactor cavity.

The gas 27 in the pressure chamber 26 is alternately compressed and expanded in dependence on the movement of the movable element and thereby exerts a variable pressure on the fluid 22 in the lower part of the expansion chamber 25. The pressure on the fluid 22 in the lower part of the expansion chamber 25 depends on the volume of the gas 27. The expansion chamber 25 causes a counter pressure on the movable element like the spring 19 described above. The fluid 22 in the lower part of the expansion chamber 25 exerts a pressure on the movable element of the hydraulic motor 24 in response to the pressure on the fluid from the gas 27. The pressure on the fluid 22 in the expansion chamber 25 increases when the gas in the pressure chamber 26 is compressed, and accordingly the counter pressure on the movable element increases. The pressure on the fluid 22 in the expansion chamber 25 decreases when the gas in the pressure chamber 26 expands, and accordingly the counter pressure on the movable element decreases.

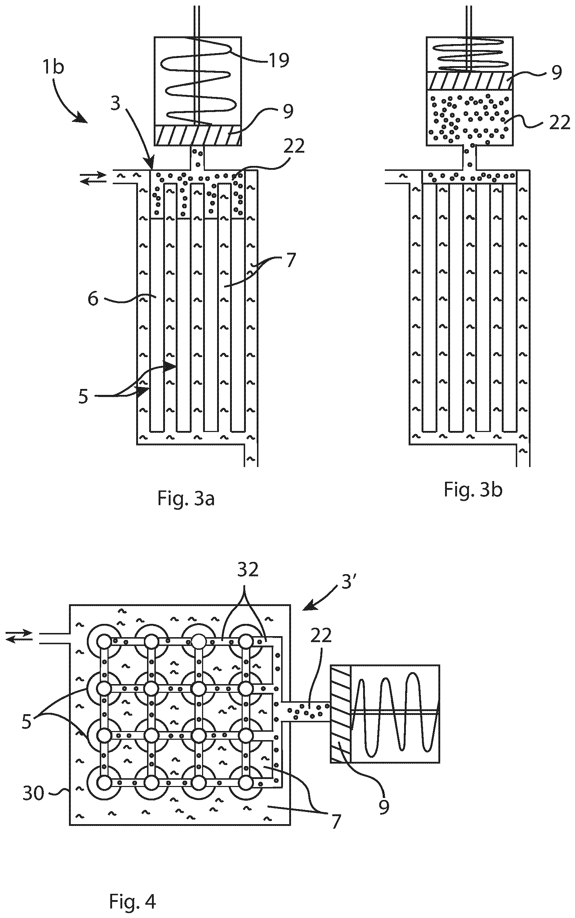

Figures 3a-b disclose an example of a thermodynamic system 1b including another type of thermal reactor 3' in a side view. Figure 4 shows a cross section through an upper part of the thermal reactor 3'. Figure 3a shows the thermodynamic system 1b when the substance 6 in the reactor cavity is contracted, and figure 3b shows the thermodynamic system when the substance 6 in the reactor cavity is expanded. As seen in the figures, the movable element 9 performs a reciprocal movement in response to the expansion and contraction of the substance 6.

In this example, the thermal reactor 3' comprises a plurality of reactor cavities 5. Each reactor cavity 5 defines a space for housing the substance 6. The reactor cavities 5 are elongated and arranged in parallel and at a distance from each other so that channels 7 for housing the cooling and heating liquids are formed between the reactor cavities 5. By providing many reactor cavities 5 arranged in parallel the cross-sectional area of each of the reactor cavities can be made small. A smaller cross-sectional area of the reactor cavity reduces the time it takes to heat and cool the substance in the reactor cavity and accordingly reduces the cycle time, and by that increases the surplus energy achieved.

The reactor cavities 5 are enclosed by an envelope 30, and the channels for housing the heating and cooling liquids are formed inside the envelope 30 and between the reactor cavities 5. Thus, the flow of liquid inside the envelope 30 is laminar. A laminar flow is advantages since it has a reduced turbulence which reduces the energy needed for pumping the flow. In this example, the envelop has a rectangular shape. However, it is also possible to have other shapes of the envelop 30, such as a cylindrical shape.

In this example, each of the reactor cavities 5 is an elongated cylinder defining a cylindrical space for housing the substance 6, the elongated cylinders are arranged in parallel and at a distance from each other. For example, the inner diameter of the cylindrical space for housing the substance is between 1 and 20 mm, and preferably between 2 and 10 mm. Such short distance between the reactor walls reduces the time it takes to heat and cool the substance in the reactor cavity and accordingly reduces the cycle time, and by that increases the surplus energy achieved. However, the cavities can have other shapes such as a rectangular cross section.

In the illustrated example, an upper part of each of the reactor cavities 5 is filled with the fluid 22, and the remaining part of each of the reactor cavities 5 is filled with the substance 6. The upper parts of the reactor cavities are connected to each other so that the fluids in each of the cavities 5 are in physical contact with each other and with the movable element 9. The upper part of the thermal reactor 3 comprises pipes 32 arranged between each of the cavities 5 for connecting the fluids of each of the cavities to one common point and connecting this point to the movable element 9. The fluid 22 is disposed between the substance 6 in the cavities 5 and the movable element 9 such that the fluid exerts a pressure on the movable element 9 when the volume of the substances 6 expands in the reactor cavities 5. The purpose of the fluid is to bring together the mechanical energy from the individual reactor cavities to one point so that the increase in volume in the cavities can be transferred to the movable element and transferred into mechanical energy.

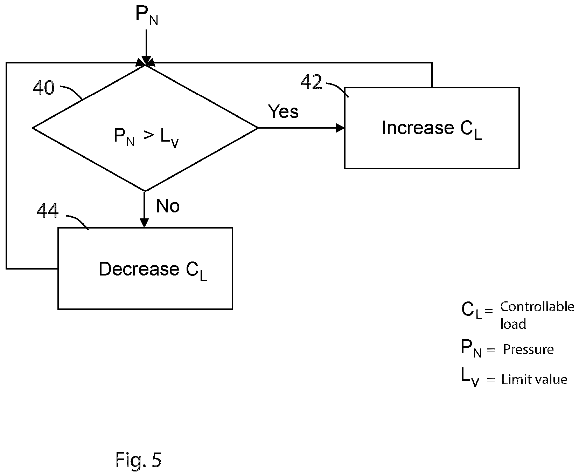

Figure 5 shows a flow diagram of an example of a method for controlling the thermal reactor. The control system 11 receives measured values P_{N} of the pressure in the one or more cavities 5 from the pressure sensors 15. For example, the control system 11 determines a mean value for the pressure in the cavity based on the measured values P_{N} received from the pressure sensors 15. The mean value of the pressure in the cavity is compared with the limit value Lv, box 40. Alternatively, each of the measured values P_{N} received from the pressure sensors 15 is compared with the limit value L_{V}. If the pressure P_{N} in the reactor cavity 5 is below the limit value L_{V}, the pressure in the at least one reactor cavity 5 is increased. This is done by increasing the controllable load C_{L}, box 42, so that the load on the movable element 9 is increased. If the pressure P_{N} in the reactor cavity 5 is above the limit value L_{V}, the pressure in the at least one reactor cavity 5 is decreased. This is done by decreasing the controllable load C_{L}, box 44, so that the load on the movable element 9 is decreased. This loop is repeated continuously when the system is running.

The present invention is not limited to the embodiments disclosed but may be varied and modified within the scope of the following claims. For example, the thermodynamic system 1d disclosed in figure 2 may include another thermal reactor connected with the fluid to the lower part of the expansion chamber 25. This thermodynamic system assumes that the thermal reactors are cooled and heated at different rates. That is, when the substance in one of the thermal reactors expands, the substance in the other thermal reactors shrinks. This configuration would cause the fluid, i.e. oil, or hydraulic fluid, to be cyclically moved from one thermal reactor to the other thermal reactor. This oscillating fluid passes the hydraulic motor 24 and can thus generate energy. The expansion chamber 25 in this case is there to smooth out any deviations in times.

### Reference list

1, 1a, 1b. thermodynamic system
3, 3'. thermal reactor
3a. first end of the thermal reactor
3b. second end of the thermal reactor
5. reactor cavity
5a. first part of the reactor cavity
5b. second part of the reactor cavity
6. substance
7. channel
7a. inlet to the channel
7b. outlet to the channel
9. movable element
10. controllable load
11. control system
12. pump
13. valve
15. pressure sensors
17. temperature sensors
19. spring
21. expansion chamber
22. fluid
24. hydraulic motor
26. pressure chamber
27. gas
28. generator
30. envelope
32. pipes

## Claims

1. A thermodynamic system (1;1a;1b) for converting thermal energy into mechanical work, wherein the thermodynamic system comprises:
- a thermal reactor (3;3') including at least one reactor cavity (5) housing a substance (6) which expands or contracts when it melts or solidifies, and at least one channel (7) for housing liquids for alternately heating and cooling the reactor cavity (5) so that the substance (6) is alternately melted and solidified,
- a movable element (9) that is oscillating in response to the expansion and contraction of the substance (6), and
- a control system (11) configured to control the switching between a flow of cooling liquid and a flow of heating liquid in said at least one channel (7), **characterized in that** the thermodynamic system comprises one or more pressure sensors (15) for measuring the pressure in the at least one reactor cavity (5), and the control system is configured to control the pressure in the reactor cavity (5) based on the measured pressure in the cavity so that the pressure in the reactor cavity approaches a limit value.

2. The thermodynamic system according to claim 1, wherein said limit value is between 50 bar and 400 bar, and preferably the limit value is between 50 bar and 200 bar.

3. The thermodynamic system according to claim 1 or 2, wherein the control system (11) is configured to control a load on the movable element (9) so that the load on the movable element (9) is increased when the measured pressure in the at least one reactor cavity (5) is below the limit value, and the load on the movable element (9) is decreased when the measured pressure in the at least one reactor cavity (5) is above the limit value.

4. The thermodynamic system according to any of the previous claims, wherein the thermodynamic system (1) comprises a controllable load (10) directly or indirectly connected to the movable element (9), and the control system (1) is configured to control the controllable load (10) so that the pressure in the reactor cavity (5) approaches the limit value.

5. The thermodynamic system according to any of the previous claims, wherein the thermodynamic system comprises resilient means (19;27) disposed on the outside of the at least one reactor cavity (5) and arranged to apply a counter pressure on the movable element (9) so that the pressure differences between cooling and heating of the at least one reactor cavity is reduced.

6. The thermodynamic system according to claim 5, wherein said resilient means comprises a spring (19) arranged to act on the movable element (9) so that the spring applies a pressure on the movable element from the outside of the reactor cavity (5) or an expansion chamber (25) filled with gas (26) arranged to apply a pressure on the movable element from the outside of the reactor cavity.

7. The thermodynamic system according to any of the previous claims, wherein the thermal reactor (3;3') has a first end (3a) and a second end (3b), the movable element (9) is disposed at the first end (3a) of the thermal reactor, the thermal reactor (3;3') comprises an inlet (7a) for the heating liquid arranged at the first end (3a) of the thermal reactor and an inlet (7b) for the cooling liquid arranged at the second end (3b) of the thermal reactor, the control system (11) is configured to control the flow of cooling and heating liquids so that the direction of the flow of heating liquid is from the first end (3a) of the thermal reactor towards the second end (3b) of the thermal reactor, and the direction of the flow of cooling liquid is from the second end (3b) towards the first end (3a) of the thermal reactor.

8. The thermodynamic system according to any of the previous claims, wherein the thermodynamic system comprises a plurality of temperature sensors (17) for measuring the temperature in different parts of the reactor cavity (5), the control system (11) is configured to determine the fraction of melted substance or the fraction of solidified substance in the reactor cavity (5) based on the measured temperatures, and to control the flow of cooling and heating liquids in said at least one channel (7) so that the fraction of melted substance in the at least one reactor cavity (5) is between 20% and 80 % of the total amount of substance in the reactor cavity.

9. The thermodynamic system according to any of the previous claims, wherein the thermodynamic system comprises a plurality of said reactor cavities (5), each reactor cavity (5) defines a space for housing the substance (6), the reactor cavities (5) are enclosed by an envelope (30), and the reactor cavities (5) are elongated and arranged in parallel and at a distance from each other so that said at least one channel (7) for housing the liquids for alternately heating and cooling the reactor cavity is formed between the reactor cavities (59 and the envelope (30).

10. The thermodynamic system according to any of the previous claims, wherein a part (5b) of the at least one reactor cavity (5) is filled with a fluid (22) having a density that differs from the density of the substance (6), said fluid (22) is disposed between the substance (6) and the movable element (9) such that the fluid (22) exerts a pressure on the movable element (9) when the volume of the substance (6) is expanding in the reactor cavity (5).

11. The thermodynamic system according to any of the previous claims, wherein the thermodynamic system comprises at least one pump (12) for providing heating and cooling liquid to said at least one channel (7), at least one valve (13) for switching between feeding heating or cooling liquid to said at least one channel (7), and said control system (11) is configured to control said at least one pump (12) and said at least one valve (13).

12. The thermodynamic system according to claim 11, wherein the control system (11) is configured to control said at least one valve (13) and said at least one pump (12) so that the cycle time for switching between feeding cooling and heating liquid is between 1s and 30s.

13. A method for controlling the thermodynamic system (1) according to any of the claims 1-12, wherein the method comprises alternately supplying heating liquid and cooling liquid to said at least one channel (7) so that the substance (6) is alternately melted and solidified, monitoring the pressure in the at least one reactor cavity (5) and increasing the pressure in the at least one reactor cavity (5) when the pressure in the reactor cavity (5) is below the limit value and decreasing the pressure in the at least one reactor cavity (5) when the pressure in the reactor cavity (5) is above the limit value.

14. The method according to claim 13, wherein the method comprises controlling the supply of heating and cooling liquids to the at least one reactor cavity (5) so that the fraction of melted substance (6) in the reactor cavity (5) is between 20% and 80 % of the total amount of substance in the reactor cavity.

15. The method according to claim 13 or 14, wherein the temperature difference between the heating and cooling liquid is between 20 and 25°C.
